(19) Europäisches Patentamt
European Patent Office
Office européen des brevets

(11) **EP 2 301 778 B1**

(12) **FASCICULE DE BREVET EUROPEEN**

(45) Date de publication et mention
de la délivrance du brevet:
**04.07.2012 Bulletin 2012/27**

(51) Int Cl.:
***B60H 1/00*** *(2006.01)* ***B60H 1/32*** *(2006.01)*

(21) Numéro de dépôt: **10179340.4**

(22) Date de dépôt: **24.09.2010**

(54) **Procédé de contrôle d'une puissance de chauffage dans une boucle thermodynamique d'une installation de climatisation**

Heizleistungssteuerungverfahren eines thermodynamischen Kreislaufs einer Klimaanlage

Control method for a heating power in the thermodynamic loop of an air conditioning device

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.09.2009 FR 0904637**

(43) Date de publication de la demande:
**30.03.2011 Bulletin 2011/13**

(73) Titulaire: **Valeo Systèmes Thermiques**
**78321 Le Mesnil Saint Denis (FR)**

(72) Inventeur: **Liu, Jin-Ming**
**78770, CONFLANS SAINT HONORINE (FR)**

(74) Mandataire: **Vieillevigne, Sébastien Nicolas Bernard**
**Valeo Systèmes Thermiques SAS**
**8, rue Louis Lormand**
**La Verrière - B.P. 513**
**78321 Le Mesnil-Saint-Denis Cedex (FR)**

(56) Documents cités:
**EP-A2- 0 747 248      WO-A1-2004/058525**
**US-A- 5 388 421      US-B1- 6 314 750**

**Description**

La présente invention se rapporte au domaine général des procédés de contrôle d'une puissance de chauffage dans une boucle thermodynamique d'une installation de climatisation, notamment du type « air/air » ou « air/fluide caloporteur », d'un véhicule.

Une telle boucle thermodynamique comprend au moins un compresseur, un évaporateur, un organe de détente et un organe de chauffage.

Dans la structure classique des installations de climatisation, l'évaporateur et l'organe de chauffage, tel qu'un condenseur auxiliaire ou un radiateur thermique, sont placés dans un conduit de circulation d'air canalisant un flux d'air apte à être traité thermiquement ou climatisé préalablement à la distribution dans un habitacle d'un véhicule automobile.

Actuellement, les boucles thermodynamiques sont contrôlées à l'aide de deux capteurs : un capteur de pression placé à la sortie du condenseur, pour mesurer la valeur de la haute pression dans la boucle thermodynamique, et un capteur de température, pour mesurer la température du flux d'air après avoir traversée l'évaporateur.

Généralement, les installations de climatisation susceptibles de fonctionner en mode « chauffage » sont en outre munies d'un capteur de température, pour mesurer la température à la sortie du conduit de circulation d'air dans laquelle circule le flux d'air à climatiser. Ainsi, il est possible de contrôler la température du flux d'air à climatiser.

Un procédé de contrôle d'un type connu est divulgué par US 6314 750 B1, qui constitué l'art antérieur le plus proche.

La présente invention a pour but principal d'éviter l'installation d'un capteur complémentaire en proposant de contrôler la puissance de chauffage fournie par la boucle thermodynamique, apte à fonctionner en mode « chauffage », à l'aide des données fournies par les deux capteurs précédemment évoqués, généralement toujours installés dans les boucles thermodynamiques.

Pour cela, l'invention propose un procédé de contrôle d'une puissance de chauffage dans une boucle thermodynamique d'une installation de climatisation, notamment d'un véhicule automobile, et comprenant au moins un évaporateur, un organe de détente, en particulier un détendeur, un compresseur et un condenseur auxiliaire et/ou un radiateur d'échange thermique, l'évaporateur, d'une part, et le condenseur auxiliaire et/ou le radiateur d'échange thermique, d'autre part, étant placés dans un conduit de circulation d'air d'un flux d'air apte à être chauffé. Plus particulièrement, indépendamment de la présence d'un capteur de température du flux d'air à la sortie du conduit de circulation d'air, le procédé comprend :

- une étape de mesure de la pression à la sortie du compresseur,
- une étape de mesure de la température de l'air avant ou après la traversée de l'évaporateur,
- une étape d'estimation de la température du flux d'air à la sortie du conduit de circulation d'air chauffé par le condenseur auxiliaire et/ou le radiateur d'échange thermique, ou une étape d'estimation de la puissance de chauffage du condenseur auxiliaire,
  à partir de la mesure de la pression à la sortie du compresseur et de la mesure de la température du flux d'air avant ou après la traversée de l'évaporateur, utilisant une expression de l'équilibre de puissance du condenseur auxiliaire et la température de saturation à la pression mesurée,
- une étape de régulation de la température du flux d'air chauffé par le condenseur auxiliaire et/ou le radiateur d'échange thermique, ou • sur la puissance de chauffage du condenseur auxiliaire et/ou le radiateur d'échange thermique,
  comparée respectivement à une consigne de la température du flux d'air conditionné en sortie du conduit de circulation d'air ou à une consigne de la puissance de chauffage du condenseur auxiliaire.

La mesure de la température de l'air au voisinage de l'évaporateur est nécessaire pour contrôle la boucle de climatisation en mode « climatisation ». Il est donc particulièrement avantageux de mesurer la température du flux d'air après la traversée de l'évaporateur.

Préférentiellement, le procédé comprend une étape d'estimation de la température du flux d'air chauffé par le condenseur auxiliaire et/ou le radiateur d'échange thermique, et/ou de la puissance de chauffage du condenseur auxiliaire et/ou le radiateur d'échange thermique, à partir de la pression mesurée à la sortie du compresseur, d'une tension d'alimentation d'un ventilateur apte à générer le flux d'air dans le conduit de circulation d'air, d'une vitesse du véhicule et de la température du flux d'air après la traversée de l'évaporateur.

Par ailleurs, selon une alternative, l'étape d'estimation de la température du flux d'air ou l'étape d'estimation de la puissance de chauffage comprend une étape intermédiaire de calcul d'un débit d'air du flux d'air transitant dans le conduit de circulation d'air et destiné à être chauffé en traversant le condenseur auxiliaire et/ou le radiateur d'échange thermique à partir d'une tension d'alimentation d'un ventilateur apte à générer le flux d'air dans le conduit de circulation d'air, d'une vitesse du véhicule et une donnée relative à la position d'un volet d'entrée d'air du flux d'air dans le conduit de circulation d'air. De plus, en complément, une donnée propre à la position d'un volet de sortie d'air du flux d'air hors du conduit de circulation d'air à destination de l'habitacle peut être utilisée dans l'étape intermédiaire de calcul d'un débit d'air du flux d'air transitant dans le conduit de circulation d'air

L'invention permet ainsi d'utiliser, pour le mode « chauffage », la même architecture électrique que dans le mode « climatisation ». L'invention utilise l'équilibre de puissance de part et d'autre du condenseur auxiliaire ou du radiateur thermique. Elle utilise aussi la connaissance de la température de saturation à la pression mesurée à la sortie du compresseur. Pour réaliser une estimation de la température à la sortie du conduit de circulation d'air apte à canaliser le flux d'air destiné à être chauffé, il est en outre nécessaire de considérer que la température du flux d'air, après son passage à travers l'évaporateur, est égale à la température du flux d'air avant son passage à travers le condenseur auxiliaire ou le radiateur d'échange thermique.

Alternativement, le procédé de contrôle comprend :

- une étape de mesure de la pression à la sortie du compresseur,
- une étape de mesure de la température du flux d'air après la traversée de l'évaporateur, et
- une étape de régulation sur la pression comparée à une consigne de pression.

Avantageusement, le procédé comprend une étape de calcul d'une consigne de pression à partir d'une tension d'alimentation d'un ventilateur apte à générer le flux d'air dans le conduit de circulation d'air, d'une vitesse du véhicule et de la température du flux d'air avant ou après la traversée de l'évaporateur.

Dans une implémentation particulière de l'invention, le conduit de circulation d'air comprenant un volet d'entrée, l'étape de mesure de la température du flux d'air après la traversée de l'évaporateur est remplacée par une étape d'estimation de la température du flux d'air après la traversée de l'évaporateur à partir d'une donnée relative à une position du volet d'entrée d'air, d'une mesure de la température de l'habitacle du véhicule et d'une mesure de la température extérieure.

Dans les divers modes de réalisation de la présente invention, la température à l'intérieur du conduit de circulation d'air est estimée à partir de données connues par ailleurs dans l'installation de climatisation. Une telle implémentation évite encore davantage le recours à des capteurs autres que ceux qui sont généralement implémentés dans les véhicules.

Le fluide réfrigérant parcourant boucle thermodynamique est, par exemple, un hydrofluorocarbure, en particulier le fluide connu sous la dénomination R134a, ou un composé à base d'hydrofluoro-oléfine, notamment le fluide connu sous la dénomination HFO1234ff. La présente invention trouve également une application avec les fluides sur-critiques, notamment le dioxyde de carbone. Dans ce cas, le condenseur principal peut prendre la forme d'un refroidisseur de gaz.

La présente invention sera mieux comprise et d'autres caractéristiques et avantages apparaîtront encore à la lecture de la description détaillée qui suit comprenant des exemples de réalisation donnés à titre illustratif en référence avec les figures annexées, données à titre d'exemples non limitatifs, qui pourront servir à compléter la compréhension de la présente invention et l'exposé de sa réalisation sur lesquels :

- la figure 1 montre schématiquement une installation de climatisation de type « air/air » dans laquelle la présente invention peut être implémentée,
- la figure 2 montre schématiquement une installation de climatisation de type « air/fluide caloporteur » dans laquelle la présente invention peut être implémentée,
- les figures 3a et 3b montrent schématiquement le principe de la régulation telle qu'utilisée dans les installations de climatisation selon la présente invention,
- la figure 4 montre schématiquement le processus de régulation sur la haute pression,
- la figure 5 montre schématiquement le processus de régulation sur la température à la sortie du conduit de circulation de l'air à chauffer, et
- la figure 6 montre schématiquement la boucle de régulation sur la puissance de chauffage du condenseur auxiliaire, ou du radiateur d'échange thermique dans le cas d'une installation de climatisation de type « air/eau ».

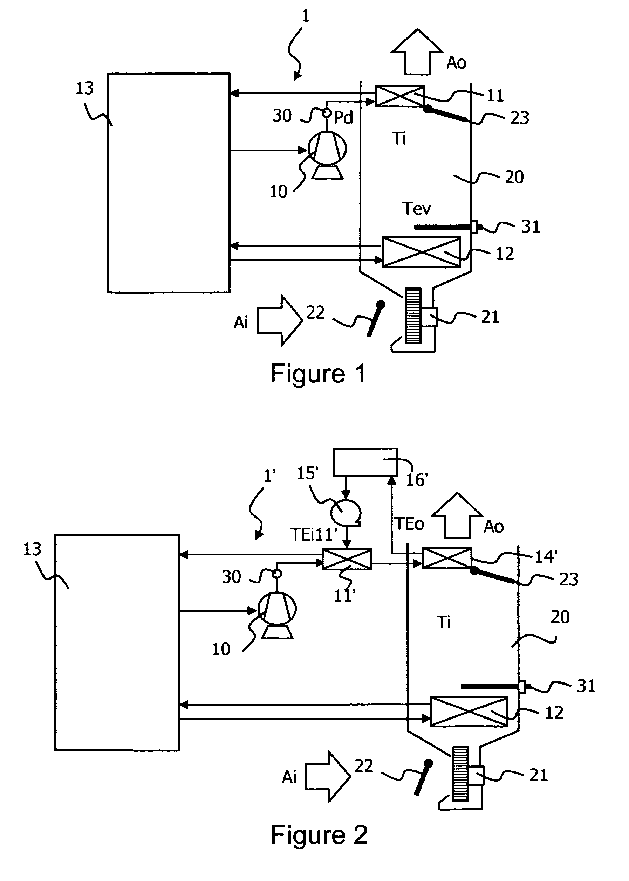

La figure 1 montre schématiquement une installation de climatisation, dite « air/air », comprenant une boucle thermodynamique 1 comportant au moins un compresseur 10, un condenseur auxiliaire 11, un évaporateur 12.

D'autres éléments peuvent être intégrés à la boucle thermodynamique 1. Sur la figure 1, afin de simplifier la représentation, les autres éléments de la boucle thermodynamique 1 sont regroupés dans un bloc 13. Les autres éléments de la boucle thermodynamique 1 sont, par exemple, un organe de détente, en particulier un détendeur, un condenseur principal, un échangeur de chaleur interne, ..., ces éléments pouvant installés en combinaison ou individuellement dans le bloc 13.

L'installation de climatisation présentée comporte, d'une part, la boucle thermodynamique 1 et, d'autre part, un conduit de circulation d'air 20 dans lequel circule un flux d'air Ai apte à être traité et à être conditionné pour définir un flux d'air conditionné Ao. Le flux d'air conditionné Ao est apte à être distribué dans diverses zones d'un habitacle d'un véhicule automobile.

Le conduit de circulation d'air 20 comprend, généralement dans sa partie amont, un ventilateur 21, associé à un volet d'entrée d'air 22 qui contrôle l'entrée du flux d'air Ai dans le conduit de circulation d'air 20, le flux d'air Ai pouvant être indifféremment un flux d'air extérieur et/ou un flux d'air recirculé provenant de l'intérieur de l'habitacle du véhicule.

Selon la structure généralement adoptée dans les installations de climatisation d'air, l'évaporateur 12 de la boucle thermodynamique 1, utilisé en mode « climatisation », ainsi que le condenseur auxiliaire 11 sont placés sur le trajet du flux d'air Ai dans le conduit de circulation d'air 20 pour générer le flux d'air conditionné Ao après la traversée de l'évaporateur 12 et/ou du condenseur auxiliaire 11.

Un volet de mixage d'air 23 est généralement installé à proximité du condenseur auxiliaire 11 pour permettre une régulation de la température du flux d'air Ao sortant du conduit de circulation d'air 20.

Pour les besoins du contrôle de l'installation de climatisation, un capteur de pression 30 est agencé en sortie du compresseur 10 et un capteur de température 31 est disposé dans le conduit de circulation d'air 20 afin de mesurer la température du flux d'air Ai, avantageusement, après son passage à travers l'évaporateur 12. Alternativement, le capteur de température 31 peut être disposé en amont de l'évaporateur 12.

Selon la présente invention, ce sont le capteur de pression 30 et le capteur de température 31 qui, indépendamment de la mise en place de capteurs additionnels, vont permettre un contrôle de la puissance de chauffage de l'installation de climatisation lorsqu'elle fonctionne en mode « chauffage » ou mode « pompe à chaleur ».

En réalité, l'invention utilise le fait qu'en mode « chauffage » ou « pompe à chaleur », la température Tev, après le passage du flux d'air à travers l'évaporateur 12 et mesurée par le capteur de température 31, est sensiblement égale à la température Ti du flux d'air dans le conduit de circulation d'air 20 avant son passage à travers le condenseur auxiliaire 11.

Selon l'exemple de réalisation de la figure 1, l'évaporateur 12 et le condenseur auxiliaire 11 sont des échangeurs de chaleur bi-fluide permettant un échange de chaleur entre le fluide réfrigérant de la boucle thermodynamique 1 et le flux d'air Ao.

La figure 2 montre schématiquement la constitution d'une variante d'une installation de climatisation d'air, dite « air/fluide caloporteur ». La structure globale est semblable à celle d'une « installation air/air » telle que décrite à la figure 1, mais, l'installation de climatisation d'air, dite « air/fluide caloporteur », de la figure 2 comporte une boucle thermodynamique 1' dans laquelle le condenseur auxiliaire 11 est remplacé par un condenseur auxiliaire 11' couplé à une boucle de fluide caloporteur comprenant au moins un radiateur d'échange thermique 14' destiné à être placé dans le conduit de circulation d'air 20 et une pompe 15'.

D'autres éléments peuvent être intégrés à la boucle de fluide caloporteur. Sur la figure 2, afin de simplifier la représentation, les autres éléments de la boucle de fluide caloporteur sont regroupés sous forme d'un bloc 16'.

Selon le mode de réalisation selon la figure 2, l'invention utilise le fait qu'en mode « chauffage » ou « pompe à chaleur », la température Tev, après le passage du flux d'air à travers l'évaporateur 12 et mesurée par le capteur de température 31, est sensiblement égale à la température Ti du flux d'air dans le conduit de circulation d'air 20 avant son passage à travers le radiateur d'échange thermique 14'.

Dans la configuration de la boucle thermodynamique 1' selon la figure 2, l'évaporateur 12 et le radiateur d'échange thermique 14' sont des échangeurs de chaleur bi-fluide permettant, respectivement, un échange de chaleur entre le fluide réfrigérant de la boucle de climatisation 1' et le flux d'air Ao et entre le fluide caloporteur de la boucle de fluide caloporteur et le flux d'air Ao. Le condenseur auxiliaire 11' est un échangeur de chaleur bi-fluide permettant un échange de chaleur entre le fluide réfrigérant de la boucle thermodynamique 1' et le fluide caloporteur de la boucle de fluide caloporteur.

Avantageusement, le fluide caloporteur circulant boucle de fluide caloporteur est de l'eau. La boucle de fluide caloporteur est alors une boucle à eau, définissant ainsi une installation de climatisation d'air, dite « air/eau ».

Dans les deux systèmes représentés sur les figures 1 et 2, la température Ti à l'intérieur du conduit de circulation d'air 20 est connue grâce par la mesure obtenue par le capteur de température 31.

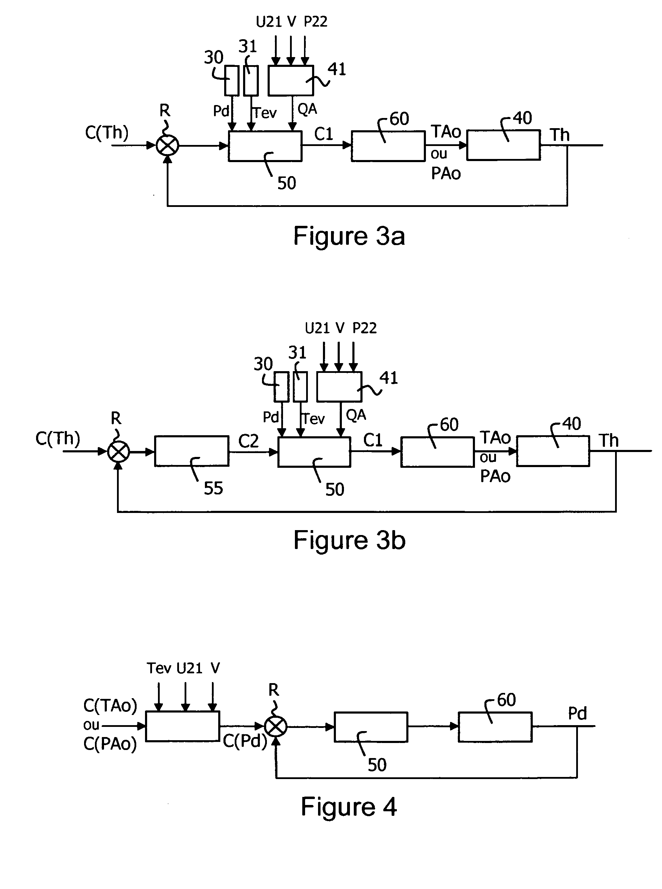

Dans les installations de climatisation d'air, une boucle de régulation sur la température de l'habitacle est généralement mise en oeuvre. Une telle boucle de régulation sur la température de l'habitacle est représentée sur les figures 3a et 3b montrant schématiquement les principes de régulation tels qu'utilisés selon la présente invention.

La figure 3a présente une boucle de régulation sur la température de l'habitacle. Selon le principe présenté, une consigne en température de l'habitacle C(Th) est fournie en entrée d'un dispositif de régulation R. L'entrée du dispositif de régulation R reçoit, d'une part, la consigne en température de l'habitacle C(Th) et, d'autre part, la température de l'habitacle mesurée Th.

Une valeur différentielle est calculée dans le dispositif de régulation R et fournie en entrée d'une unité de contrôle 50 destinée à produire en sortie, un signal de commande C1 pour la boucle thermodynamique 1. Avantageusement, le signal de commande C1 est un signal visant à modifier la capacité du compresseur 10 et/ou la tension d'alimentation d'un ventilateur extérieur apte à générer un flux d'air traversant le condenseur principal, généralement disposé en face avant du véhicule.

Selon la variante de réalisation détaillée sur la figure 3b, la boucle de régulation sur la température de l'habitacle comporte également une unité de régulation 55 pour la température de l'habitacle disposée après l'entrée du dispositif de régulation R.

Une valeur différentielle est calculée dans le dispositif de régulation R et est fournie en entrée de l'unité de régulation 55 destinée à produire en sortie, selon une loi de commande, par exemple de type PID, un signal de consigne C2 définissant une consigne de la puissance de chauffage ou une consigne de température du flux d'air conditionné Ao. Le signal de consigne C2 constitue l'entrée du contrôleur 50 afin d'établir le signal de commande C1, tel que défini précédemment en relation avec la figure 3a.

Avantageusement, et de façon optionnelle, la boucle de régulation comporte une unité de commande 60 représentant le procédé de la boucle thermodynamique 1 et permettant de réguler la boucle thermodynamique 1.

La modification de fonctionnement de la boucle thermodynamique 1 suivant le signal de commande C1 permet que la température de l'habitacle Th tende vers la consigne en température de l'habitacle C(Th), jusqu'à l'atteindre. La convergence entre la température de l'habitacle Th et la consigne en température de l'habitacle C(Th) est suivie et vérifiée grâce à une mesure de la température dans l'habitacle Th transmise à une unité de mesure de la température 40.

Selon l'invention, l'unité de contrôle 50 permet de calculer un paramètre de fonctionnement de la boucle thermodynamique 1 à partir de la mesure de la pression Pd réalisée par le capteur de pression 30 et à partir de la mesure de la température Tev réalisée par le capteur de température 31 après le passage du flux d'air à travers l'évaporateur 12. Ainsi, il n'est pas nécessaire d'employer d'autres capteurs pour permettre le calcul du paramètre de fonctionnement de la boucle thermodynamique 1.

Selon une alternative de réalisation, l'unité de contrôle 50 reçoit également une valeur du débit d'air QA du flux d'air Ai transitant dans le conduit de circulation d'air 20 et destiné à être chauffé en traversant le condenseur auxiliaire 11 ou le radiateur d'échange thermique 14'. Généralement, le débit d'air QA est calculé dans un module de calcul 41. Afin de calculer le débit d'air QA, le module de calcul 41 utilise divers paramètres propres à l'installation de climatisation, tels que, notamment, la tension d'alimentation U21 du ventilateur 21, une donnée relative à la vitesse du véhicule V et une donnée relative à la position P22 du volet d'entrée d'air 22.

Selon la présente invention, l'unité de contrôle 50 utilise la puissance de chauffage PAo du condenseur auxiliaire 11 pour estimer la température TAo du flux d'air Ao à la sortie du conduit de circulation d'air 20. De façon générale, la température TAo du flux d'air Ao à la sortie du conduit de circulation d'air 20 peut être assimilée à la température de l'habitacle Th.

L'unité de contrôle 50 peut être réalisée, selon la présente invention, selon divers modes de réalisations, tels que présentés aux figures 4, 5 et 6.

La puissance PAo peut s'écrire selon la double équation suivante :

$$PAo = QA * cp\_A * (TAo - Ti) = KS * \left( Tsat(Pd) - \frac{Ti + TAo}{2} \right)$$

où cp_A est la capacité calorifique du flux d'air, Ti est la température à l'intérieur du conduit de circulation d'air 20 avant le condenseur auxiliaire 11, et

Tsat est la température de saturation à la pression Pd mesurée par le capteur de pression 30.

Dans l'hypothèse formulée de la présente invention, la température de l'air Ti à l'intérieur du conduit de circulation d'air 20 entre l'évaporateur 12 et le condenseur auxiliaire 11 est égale à la température Tev du flux d'air Ai après son passage à travers l'évaporateur 12, on a alors :

$$PAo = QA * cp\_A * (TAo - Tev) = KS * \left( Tsat(Pd) - \frac{Tev + TAo}{2} \right)$$

Finalement, la température TAo du flux d'air conditionné Ao en sortie du conduit de circulation d'air 20 s'exprime alors selon la relation suivante :

$$TAo = \frac{KS}{QA * cp\_A + \dfrac{KS}{2}} * Tsat(Pd) + \frac{QA * cp\_A - \dfrac{KS}{2}}{QA * cp\_A + \dfrac{KS}{2}} * Tev$$

ou encore la puissance PAo du condenseur auxiliaire 11 selon l'équation :

$$PAo = \frac{KS}{1 + \dfrac{KS}{2 * QA * cp\_A}} * \left(Tsat(Pd) - Tev\right)$$

Afin de réaliser la régulation et d'assurer le contrôle de la température TAo de sortie du flux d'air Ao, l'unité de contrôle 50 fonctionne alors en faisant une régulation sur la pression Pd mesurée par le capteur de pression 30 en sortie du compresseur 10 en calculant une valeur de consigne de pression C(Pd) à partir de la tension d'alimentation U21 du ventilateur 21, la vitesse du véhicule V, la mesure Tev et une consigne C(TAo) de la température TAo du flux d'air conditionné Ao en sortie du conduit de circulation d'air 20 ou une consigne C(PAo) de la puissance de chauffage PAo du condenseur auxiliaire 11. Une telle régulation est illustrée sur la figure 4 montrant schématiquement le processus de régulation, dite « régulation sur la haute pression ».

De plus, l'unité de contrôle 50 calcule une valeur de consigne de pression C(Pd), en complément des paramètres définis précédemment, à partir également d'une estimation de la température de sortie de l'air TAo calculée à partir de la pression Pd mesurée par le capteur de pression 30 en sortie du compresseur 12.

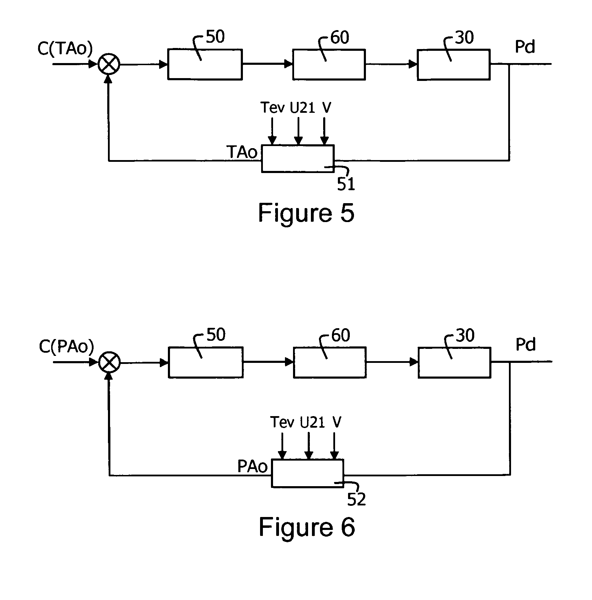

Il est également possible d'utiliser les équations détaillées précédemment pour faire une régulation directement sur la température de sortie TAo du flux d'air Ao. Il est alors nécessaire de calculer, dans une étape 51, la valeur estimée de la température de sortie de l'air TAo à partir de la pression mesurée Pd, de la tension d'alimentation U21 du ventilateur 21, la vitesse du véhicule V et la température Tev mesurée par le capteur de température 31. Une telle régulation est illustrée sur la figure 5 montrant schématiquement le processus de régulation sur la température Tao en sortie du conduit de circulation d'air 20. Dans une telle réalisation, la valeur de consigne C(TAo) de la température de sortie TAo du flux d'air est directement utilisée pour faire la régulation sur la température de sortie TAo du flux d'air Ao.

Il est également possible d'utiliser les équations détaillées précédemment pour calculer, dans une étape 52, la valeur de la puissance de chauffage PAo du condenseur auxiliaire 11 à partir de la pression mesuré Pd mesurée par le capteur de pression 30 en sortie du compresseur 10, la tension d'alimentation U21 du ventilateur 21, la vitesse du véhicule V et la température Tev mesurée. Une telle régulation est illustrée sur la figure 6 montrant schématiquement la boucle de régulation sur la puissance de chauffage PAo du condenseur auxiliaire 11. Dans une telle réalisation, une valeur de consigne C(PAo) de la puissance de chauffage PAo du condenseur auxiliaire 11 est utilisée.

Dans le cas où un dispositif de chauffage électrique complémentaire est utilisé à la suite du condenseur auxiliaire à eau 11', la puissance de chauffage PAo du condenseur auxiliaire à eau 11' est égale à :

$$PAo = C(PAo) - Pel$$

où C(PAo) est la consigne de la puissance de chauffage et
Pel est la puissance du chauffage électrique.

Ainsi, la température TAo du flux d'air à la sortie du conduit de circulation d'air 20 s'écrit alors :

$$TAo = \frac{Pel}{QA * cp\_A} + \frac{KS}{QA * cp\_A + \dfrac{KS}{2}} * Tsat(Pd) + \frac{QA * cp\_A - \dfrac{KS}{2}}{QA * cp\_A + \dfrac{KS}{2}} * Tev$$

Dans un tel agencement intégrant un dispositif de chauffage électrique complémentaire, les principes de régulation, tel que présentés précédemment, peuvent être utilisés.

Dans le cas d'une installation de climatisation de type « air/fluide caloporteur » tel que représenté sur la figure 2, l'invention considère que la température TEo à la sortie du radiateur d'échange thermique 14' est égale à la température TEi11' à l'entrée du condenseur auxiliaire à eau 11'.

Ainsi, la puissance de chauffage PAo produite par le condenseur auxiliaire à eau 11' et le radiateur d'échange thermique 14' s'exprime :

$$PAo = \frac{KS}{1 + \frac{KS}{2*QE*cp\_E}} * (Tsat(Pd) - TEi11')$$

Et la température TAo du flux d'air Ao à la sortie du conduit de circulation d'air 20 s'écrit donc :

$$TAo = Ti + \frac{PAo}{QA*cp\_A}$$

$$= Ti + \frac{KS}{QA*cp\_A*\left(1 + \frac{KS}{2*QE*cp\_E}\right)} * (Tsat(Pd) - TEi11')$$

En considérant que la température Ti à l'intérieur du conduit de circulation d'air 20 est égale à la température Tev après le passage du flux d'air à travers l'évaporateur 12, il est alors possible de mettre en oeuvre les principes de régulation détaillés précédemment.

La présente invention et la méthode décrites sont particulièrement avantageuses dans le cas d'une boucle thermodynamique fonctionnant avec un fluide sous-critique.

On remarque enfin que diverses mises en oeuvre peuvent être réalisées selon les principes de l'invention. Il doit être bien entendu toutefois que ces exemples de fonctionnement sont donnés à titre d'illustration de l'objet de l'invention. Bien évidemment, l'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention telle que définie par les revendications.

**Revendications**

**1.** Procédé de contrôle d'une puissance de chauffage (PAo) dans une boucle thermodynamique (1) d'une installation de climatisation, notamment d'un véhicule automobile, et comprenant au moins un évaporateur (12), un organe de détente, un compresseur (10) et un condenseur auxiliaire (11, 11') et/ou un radiateur d'échange thermique (14'), l'évaporateur (12) et le condenseur auxiliaire (11, 11') et/ou le radiateur d'échange thermique (14') étant placés dans un conduit de circulation d'air (20) d'un flux d'air (Ai, Ao) apte à être chauffé, le procédé de contrôle comprenant

  • une étape de mesure d'une pression (Pd) à la sortie du compresseur (10),
  • une étape de mesure d'une température (Tev) du flux d'air avant ou après l'évaporateur (12), ou une étape d'estimation d'une température (Tev) du flux d'air avant ou après l'évaporateur (12),
  • une étape d'estimation d'une température (TAo) du flux d'air (Ao) à la sortie du conduit de circulation d'air (20) chauffé par le condenseur auxiliaire (11, 11') et/ou le radiateur d'échange thermique (14'), à partir de la mesure de la pression (Pd) à la sortie du compresseur (10) et de la mesure de la température (Tev) du flux d'air avant ou après l'évaporateur (12), et
  • une étape de régulation de la température (TAo) du flux d'air (Ao) chauffé par le condenseur auxiliaire (11,11') et/ou le radiateur d'échange thermique (14') comparée à une consigne C(TAo) de la température (TAo) du flux d'air conditionné (Ao) en sortie du conduit de circulation d'air (20).

2. Procédé de contrôle d'une puissance de chauffage (PAo) dans une boucle thermodynamique (1) d'une installation de climatisation, notamment d'un véhicule automobile, et comprenant au moins un évaporateur (12), un compresseur (10) et un condenseur auxiliaire (11, 11') et/ou un radiateur d'échange thermique (14'), l'évaporateur (12) et le condenseur auxiliaire (11, 11') et/ou le radiateur d'échange thermique (14') étant placés dans un conduit de circulation d'air (20) d'un flux d'air (Ai, Ao) apte à être chauffé,
   **caractérisé en ce que** le procédé de contrôle comprend :

   • une étape de mesure d'une pression (Pd) à la sortie du compresseur (10),
   • une étape de mesure d'une température (Tev) du flux d'air avant ou après l'évaporateur (12), ou une étape d'estimation d'une température (Tev) du flux d'air avant ou après l'évaporateur (12),
   • une étape d'estimation de la puissance de chauffage (PAo) du condenseur auxiliaire (11, 11') et/ou le radiateur d'échange thermique (14') à partir de la mesure de la pression (Pd) à la sortie du compresseur (10) et de la mesure de la température (Tev) du flux d'air avant ou après de l'évaporateur (12), et
   • une étape de régulation de la puissance de chauffage (PAo) du condenseur auxiliaire (11,11') et/ou le radiateur d'échange thermique (14') comparée à une consigne C(PAo) de la puissance de chauffage (PAo) du condenseur auxiliaire (11).

3. Procédé de contrôle selon l'une des revendications 1 à 2, dans lequel le procédé comprend une étape d'estimation de la température (TAo) du flux d'air (Ao) chauffé par le condenseur auxiliaire (11,11') et/ou le radiateur d'échange thermique (14') à partir de la mesure de la pression (Pd) à la sortie du compresseur (10), d'une tension d'alimentation (U21) d'un ventilateur (21), apte à générer le flux d'air dans le conduit de circulation d'air (20), d'une vitesse du véhicule (V) et de la mesure de la température (Tev) du flux d'air avant ou après de l'évaporateur (12).

4. Procédé de contrôle selon l'une des revendications 1 à 3, dans lequel le procédé comprend une étape d'estimation de la puissance de chauffage (PAo) du condenseur auxiliaire (11,11') et/ou le radiateur d'échange thermique (14') à partir de la mesure de la pression (Pd) à la sortie du compresseur (10), d'une tension d'alimentation (U21) d'un ventilateur (21) apte à générer le flux d'air dans le conduit de circulation d'air (20), d'une vitesse du véhicule (V) et de la mesure de la température (Tev) du flux d'air avant ou après l'évaporateur (12).

5. Procédé de contrôle selon l'une des revendications 1 à 4, dans lequel l'étape d'estimation de la température (TAo) du flux d'air (Ao) ou l'étape d'estimation de la puissance de chauffage (PAo) comprend une étape intermédiaire de calcul d'un débit d'air (QA) du flux d'air, transitant dans le conduit de circulation d'air (20) et destiné à être chauffé par le condenseur auxiliaire (11) ou le radiateur d'échange thermique (14'), à partir d'une tension d'alimentation (U21) d'un ventilateur (21) apte à générer le flux d'air dans le conduit de circulation d'air (20), d'une vitesse du véhicule (V) et une donnée relative à la position (P22) d'un volet d'entrée d'air (22) du flux d'air dans le conduit de circulation d'air (20).

6. Procédé de contrôle d'une puissance de chauffage (PAo) dans une boucle thermodynamique (1) d'une installation de climatisation pour un véhicule automobile, et comprenant au moins un évaporateur (12), un compresseur (10) et un condenseur auxiliaire (11, 11') et/ou un radiateur d'échange thermique (14'), l'évaporateur (12) et le condenseur auxiliaire (11, 11') et/ou le radiateur d'échange thermique (14') étant placés dans un conduit de circulation d'air (20) d'un flux d'air (Ai, Ao) apte à être chauffé, **caractérisé en ce que** le procédé de contrôle comprend :

   • une étape de mesure d'une pression (Pd) à la sortie du compresseur (10),
   • une étape de mesure d'une température (Tev) du flux d'air avant ou après l'évaporateur (12), ou une étape d'estimation d'une température (Tev) du flux d'air avant ou après l'évaporateur (12), et
   • une étape de régulation de la pression (Pd) comparée à une consigne de pression C(Pd) calculée à partir d'une tension d'alimentation (U21) d'un ventilateur (21), apte à générer le flux d'air (Ai, Ao) dans le conduit de circulation d'air (20), d'une vitesse du véhicule (V) et de la mesure de la température (Tev) du flux d'air avant ou après l'évaporateur (12).

7. Procédé de contrôle selon l'une des revendications 1 à 6, dans lequel l'étape d'estimation de la température (Tev) du flux d'air avant ou après l'évaporateur (12) est réalisée à partir d'une donnée relative à une position (P22) d'un volet d'entrée d'air (22), d'une mesure de la température de l'habitacle (Th) du véhicule et d'une mesure de la température extérieure.

**Claims**

1. Method for controlling a heating power (PAo) in a thermodynamic loop (1) of an air conditioning installation, notably of a motor vehicle, and comprising at least one evaporator (12), one expansion member, one compressor (10) and one auxiliary condenser (11, 11') and/or one heat exchange radiator (14'), the evaporator (12) and the auxiliary condenser (11, 11') and/or the heat exchange radiator (14') being placed in an air circulation duct (20) for an air stream (Ai, Ao) capable of being heated,
the control method comprising:

   • a stop of measuring a pressure (Pd) at the output of the compressor (10),
   • a step of measuring a temperature (Tev) of the air stream before or after the evaporator (12), or a step of estimating a temperature (Tev) of the air stream before or after the evaporator (12),
   • a step of estimating a temperature (TAo) of the air stream (Ao) at the output of the air circulation duct (20) heated by the auxiliary condenser (11, 11') and/or the heat exchange radiator (14'), based on the measurement of the pressure (Pd) at the output of the compressor (10) and on the measurement of the temperature (Tev) of the air stream before or after the evaporator (12), and
   • a step of regulating the temperature (TAo) of the air stream (Ao) heated by the auxiliary condenser (11, 11') and/or the heat exchange radiator (14') compared to a set point C(TAo) of the temperature (TAo) of the conditioned air stream (Ao) at the output of the air circulation duct (20).

2. Method for controlling a heating power (PAo) in a thermodynamic loop (1) of an air conditioning installation, notably of a motor vehicle, and comprising at least one evaporator (12), one compressor (10) and one auxiliary condenser (11, 11') and/or one heat exchange radiator (14'), the evaporator (12) and the auxiliary condenser (11, 11') and/or the heat exchange radiator (14') being placed in an air circulation duct (20) of an air stream (Ai, Ao) capable of being heated,
**characterized in that** the control method comprises:

   • a step of measuring a pressure (Pd) at the output of the compressor (10),
   • a step of measuring a temperature (Tev) of the air stream before or after the evaporator (12), or a step of estimating a temperature (Tev) of the air stream before or after the evaporator (12),
   • a step of estimating the heating power (PAo) of the auxiliary condenser (11, 11') and/or the heat exchange radiator (14') based on the measurement of the pressure (Pd) at the output of the compressor (10) and on the measurement of the temperature (Tev) of the air stream before or after the evaporator (12), and
   • a step of regulating the heating power (PAo) of the auxiliary condenser (11, 11') and/or the heat exchange radiator (14') compared to a set point C(PAo) of the heating power (PAo) of the auxiliary condenser (11).

3. Control method according to one of Claims 1 or 2, in which the method comprises a step of estimating the temperature (TAo) of the air stream (Ao) heated by the auxiliary condenser (11, 11') and/or the heat exchange radiator (14') based on the measurement of the pressure (Pd) at the output of the compressor (10), on a power supply voltage (U21) of a fan (21), capable of generating the air stream in the air circulation duct (20), on a speed of the vehicle (V) and on the measurement of the temperature (Tev) of the air stream before or after the evaporator (12).

4. Control method according to one of Claims 1 to 3, in which the method comprises a step of estimating the heating power (PAo) of the auxiliary condenser (11, 11') and/or the heat exchange radiator (14') based on the measurement of the pressure (Pd) at the output of the compressor (10), on a power supply voltage (U21) of a fan (21) capable of generating the air stream in the air circulation duct (20), on a speed of the vehicle (V) and on the measurement of the temperature (Tev) of the air stream before or after the evaporator (12).

5. Control method according to one of Claims 1 to 4, in which the step of estimating the temperature (TAo) of the air stream (Ao) or the step of estimating the heating power (PAo) comprises an intermediate step of computing an air flow rate (QA) of the air Stream, flowing in the air circulation duct (20) and intended to be heated by the auxiliary condenser (11) or the heat exchange radiator (14'), based on a power supply voltage (U21) of a fan (21) capable of generating the air stream in the air circulation duct (20), on a speed of the vehicle (V), and a datum relating to the position (P22) of an air inlet flap (22) for the air stream in the air circulation duct (20).

6. Method for controlling a heating power (PAo) in a thermodynamic loop (1) of an air conditioning installation for a motor vehicle, and comprising at least one evaporator (12), one compressor (10) and one auxiliary condenser (11, 11') and/or one heat exchange radiator (14'), the evaporator (12) and the auxiliary condenser (11, 11') and/or the heat exchange radiator (14') being placed in an air circulation duct (20) for an air stream (Ai, Ao) capable of being heated, **characterized in that** the control method comprises:

> • a step of measuring a pressure (Pd) at the output of the compressor (10),
> • a step of measuring a temperature (Tev) of the air stream before or after the evaporator (12), or a step of estimating a temperature (Tev) of the air stream before or after the evaporator (12), and
> • a step of regulating the pressure (Pd) compared to a pressure set point C(Pd) computed on the basis of a power supply voltage (U21) of a fan (21), capable of generating the air stream (Ai, Ao) in the air circulation duct (20), on a speed of the vehicle (V) and on the measurement of the temperature (Tev) of the air stream before or after the evaporator (12).

7. Control method according to one of Claims 1 to 6, in which the step of estimating the temperature (Tev) of the air stream before or after the evaporator (12) is performed on the basis of a datum relating to a position (P22) of an air inlet flap (22), of a measurement of the temperature of the passenger compartment (Th) of the vehicle and of a measurement of the outside temperature.

**Patentansprüche**

1. Verfahren zur Steuerung einer Heizleistung (PAo) in einem thermodynamischen Kreislauf (1) einer Klimaanlage, insbesondere eines Kraftfahrzeugs, die mindestens einen Verdampfer (12), ein Expansionsorgan, einen Kompressor (10) und einen Hilfskondensator (11, 11') und/oder einen Wärmotauscher-Radiator (14') enthält, wobei der Verdampfer (12) und der Hilfskondensator (11, 11') und/oder der Wärmetauscher-Radiator (14') in einem Tuftumwälzkanal (20) eines Luftstroms (Ai, Ao) angeordnet sind, der erwärmt werden kann,

   wobei das Steuerverfahren enthält:

   > • einen Schrilt der Messung eines Drucks (Pd) am Ausgang des Kompressors (10),
   > • einen Schrilt der Messung einer Temperatur (Tev) des Luftstroms vor oder nach dem Verdampfer (12), oder einen Schritt der Schätzung einer Temperatur (Tev) des Luftstroms vor oder nach dem Verdampfer (12),
   > • einen Schritt der Schätzung einer Temperatur (TAo) des Luftstroms (Ao) am Ausgang des Luftumwälzkanals (20), der von dem Hilfskondensator (11, 11') und/oder dem Wärmetauscher-Radiator (14') erwärmt wird, ausgehend von der Messung des Drucks (Pd) am Ausgang des Kompressors (10) und der Messung der Temperatur (Tev) des Luftstroms vor oder nach dem Verdampfer (12), und
   > • einen Schritt der Regelung der Temperatur (TAo) des vom Hilfskondensator (11, 11') und/oder vom Wärmetauscher-Radiator (14') erwärmten Luftstroms (Ao) verglichen mit einem Sollwert C(TAo) der Temperatur (TAo) des klimatisierten Luftstroms (Ao) am Ausgang des Luftumwälzkanals (20).

2. Verfahren zur Steuerung einer Heizleistung (PAo) in einem thermodynamischen Kreislauf (1) einer Klimaanlage, insbesondere eines Kraftfahrzeugs, die mindestens einen Verdampfer (12), einen Kompressor (10) und einen Hilfskondensator (11, 11') und/oder einen Wärmetauscher-Radiator (14') enthält, wobei der Verdampfer (12) und der Hilfskondensator (11, 11') und/oder der Wärmetauscher-Radiator (14') in einem Luftumwälzkanal (20) eines Luftstroms (Ai, Ao) angeordnet sind, der erwärmt werden kann,
   **dadurch gekennzeichnet, dass** das Steuerverfahren enthält:

   > • einen Schritt der Messung eines Drucks (Pd) am Ausgang des Kompressors (10),
   > • einen Schritt der Messung einer Temperatur (Tev) des Luftstroms vor oder nach dem Verdampfer (12), oder einen Schritt der Schätzung einer Temperatur (Tev) des Luftstroms vor oder nach dem Verdampfer (12),
   > • einen Schritt der Schätzung der Heizleistung (PAo) des Hilfskondensators (11, 11') und/oder des Wärmetauscher-Radiators (14') ausgehend von der Messung des Drucks (Pd) am Ausgang des Kompressors (10) und der Messung der Temperatur (Tev) des Luftstroms vor oder nach dem Verdampfer (12), und
   > • einen Schritt der Regelung der Heizleistung (PAo) des Hilfskondensators (11, 11') und/oder des Wärmetauscher-Radiators (14') verglichen mit einem Sollwert C(PAo) der Heizleistung (PAo) des Hilfskondensators (11).

3. Steuerverfahren nach einem der Ansprüche 1 bis 2, bei dem das Verfahren einen Schritt der Schätzung der Temperatur (TAo) des vom Hilfskondensator (11, 11') und/oder vom Wärmetauscher-Radiator (14') erwärmten Luftstroms (Ao) ausgehend von der Messung des Drucks (Pd) am Ausgang des Kompressors (10), einer Speisespannung (U21) eines Lüfters (21), der den Luftstrom im Luftumwälzkanal (20) erzeugen kann, einer Geschwindigkeit des Fahrzeugs (V) und der Messung der Temperatur (Tev) des Luftstroms vor oder nach dem Verdampfer (12) enthält.

4. Steuerverfahren nach einem der Ansprüche 1 bis 3, bei dem das Verfahren einen Schritt der Schätzung der Heizleistung (PAo) des Hilfskondensators (11, 11') und/oder des Wärmetauscher-Radiators (14') ausgehend von der Messung des Drucks (Pd) am Ausgang des Kompressors (10), einer Speisespannung (U21) eines Lüfters (21), der den Luftstrom im Luftumwälzkanal (20) erzeugen kann, einer Geschwindigkeit des Fahrzeugs (V) und der Messung der Temperatur (Tev) des Luftstroms vor oder nach dem Verdampfer (12) enthält.

5. Steuerverfahren nach einem der Ansprüche 1 bis 4, bei dem der Schritt der Schätzung der Temperatur (TAo) des Luftstroms (Ao) oder der Schritt der Schätzung der Heizleistung (PAo) einen zwischenschritt der Berechnung einer Luftdurchflussmenge (QA) des Luftstroms, die durch den Luftumwälzkanal (20) geht und vom Hilfskondensator (11) oder vom Wärmetauscher-Radiator (14') erwärmt werden soll, ausgehend von einer Speisespannung (U21) eines Lüfters (21), der den Luftstrom in dem Luftumwälzkanal (20) erzeugen kann, einer Geschwindigkeit des Fahrzeugs (V) und einem Datenwert bezüglich der Stellung (P22) einer Lufteinlassklappe (22) des Luftstroms in den Luftumwälzkanal (20) enthält.

6. Verfahren zur Steuerung einer Heizleistung (PAo) in einem thermodynamischen Kreislauf (1) einer Klimaanlage für ein Kraftfahrzeug, die mindestens einen Verdampfer (12), einen Kompressor (10) und einen Hilfskondensator (11, 11') und/oder einen Wärmetauscher-Radiator (14') enthält, wobei der Verdampfer (12) und der Hilfskondensator (11, 11') und/oder der Wärmetauscher-Radiator (14') in einem Luftumwälzkanal (20) eines Luftstroms (Ai, Ao) angeordnet sind, der erwärmt werden kann,
**dadurch gekennzeichnet, dass** das Steuerverfahren enthält:

• einen Schritt der Messung eines Drucks (Pd) am Ausgang des Kompressors (10),
• einen SchriLt der Messung einer Temperatur (Tev) des Luftstroms vor oder nach dem Verdampfer (12), oder einen Schritt der Schätzung einer Temperatur (Tev) des Luftstroms vor oder nach dem Verdampfer (12), und
• einen Schritt der Regelung des Drucks (Pd) verglichen mit einem Drucksollwert C(Pd), der ausgehend von einer Speisespannung (U21) eines Lüfters (21), der den Luftstrom (Ai, Ao) in dem Luftumwälzkanal (20) erzeugen kann, einer Geschwindigkeit des Fahrzeugs (V) und der Messung der Temperatur (Tev) des Luftstroms vor oder nach dem Verdampfer (12) berechnet wird.

7. Steuerverfahren nach einem der Ansprüche 1 bis 6, bei dem der Schritt der Schätzung der Temperatur (Tev) des Luftstroms vor oder nach dem Verdampfer (12) ausgehend von einem Datenwert bezüglich einer Stellung (P22) einer Lufteinlassklappe (22), einer Messung der Temperatur des Innenraums (Th) des Fahrzeugs und einer Messung der Außentemperatur durchgeführt wird.

Figure 1

Figure 2

U21 V P22

30 31 41

Pd Tev QA

C(Th) R 60 TAo 40 Th
ou
PAo

50

## Figure 3a

U21 V P22

30 31 41

Pd Tev QA

C(Th) R C2 C1 60 TAo 40 Th
ou
55 50 PAo

## Figure 3b

Tev U21 V

C(TAo) R 60 Pd
ou
C(PAo) C(Pd)

50

## Figure 4

Figure 5

Figure 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6314750 B1